(19) Europäisches Patentamt
European Patent Office
Office européen des brevets

(11) Veröffentlichungsnummer: **0 061 692**
**B1**

(12) # EUROPÄISCHE PATENTSCHRIFT

(45) Veröffentlichungstag der Patentschrift: **31.10.84**

(51) Int. Cl.³: **C 08 L 25/12**, C 08 L 51/08

(21) Anmeldenummer: **82102382.7**

(22) Anmeldetag: **23.03.82**

(54) **Antistatische thermoplastische Formmassen.**

(30) Priorität: **28.03.81 DE 3112428**

(43) Veröffentlichungstag der Anmeldung: **06.10.82 Patentblatt 82/40**

(45) Bekanntmachung des Hinweises auf die Patenterteilung: **31.10.84 Patentblatt 84/44**

(84) Benannte Vertragsstaaten: **BE DE FR GB NL**

(56) Entgegenhaltungen: **Keine Entgegenhaltungen.**

(73) Patentinhaber: **BASF Aktiengesellschaft, Carl-Bosch-Strasse 38, D-6700 Ludwigshafen (DE)**

(72) Erfinder: **Brandstetter, Franz, Dr., Ritterbuechel 45, D-6730 Neustadt (DE)**
Erfinder: **Hambrecht, Juergen, Dr., Werderstrasse 30, D-6900 Heidelberg (DE)**
Erfinder: **Scharf, Bernhard, Dr., Branichstrasse 3, D-6905 Schriesheim (DE)**
Erfinder: **Lindenschmidt, Gerhard, Dr., Buchenweg 11, D-6906 Leimen (DE)**
Erfinder: **Schwaab, Josef, Dr., Rieslingweg 8, D-6735 Maikammer (DE)**
Erfinder: **Jung, Rudolf H., Dr., Liebenauer Strasse 132, D-6520 Worms (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft antistatische thermoplastische Formmassen auf der Basis von gegebenenfalls durch kautschukartige Polymerisate modifizierten Copolymeren von Styrol und/oder $\alpha$-Methylstyrol und Acrylnitril, wie SAN, ASA und ABS-Polymeren, die als antistatisches Mittel einen durch Styrol-Acrylnitril-Copolymerisate modifizierten Polyhydroxypolyalkylenpolyäther enthalten.

Es ist bekannt, thermoplastische Formmassen auf der Basis von Vinylaromaten-Acrylnitril-Copolymeren antistatisch auszurüsten. Geeignete bekannte antistatisch wirkende Substanzen sind z. B. Amine, Amide, Salze quartärer Ammoniumbasen, Sulfonsäuren, Alkyl- bzw. Aryl- bzw. Alkylarylsulfonate, Polyäther auf der Basis von Ethylenoxid und Propylenoxid und deren Alkyl- bzw. Arylether und deren Ester, wobei als Säurekomponenten sowohl anorganische als auch organische Säuren in Frage kommen. Der Zusatz dieser Mittel erfolgt, um die Verstaubung von Fertigteilen zurückzudrängen. Solche antistatische thermoplastische Formmassen sind beispielsweise in den Deutschen Patentschriften 1 244 398 und 1 258 083 beschrieben.

Alle diese Formmassen besitzen mehr oder weniger große Mängel. So wird beim Einsatz von niedermolekularen Antistatika häufig eine Belagbildung an der Oberfläche von Formen und Fertigteilen und eine verminderte Wärmeformbeständigkeit beobachtet. Werden oligomere oder polymere, antistatisch wirkende Substanzen verwendet, so sind häufig eine verminderte Zähigkeit und ungünstige Verarbeitungseigenschaften festzustellen.

Es bestand also die Aufgabe, antistatische Mittel aufzufinden, die mit den Vinylaromaten-Acrylnitril-Copolymeren besonders gut verträglich sind, die nicht zu einer Belagbildung an der Oberfläche von Formen und Fertigteilen führen, die die Wärmeformbeständigkeit und die Zähigkeit der Fertigteile nicht vermindern, die nicht zu ungünstigen Verarbeitungseigenschaften führen und die gleichzeitig ein sehr gutes antistatisches Verhalten zeigen und nur in geringer Menge angewendet werden müssen, und die nicht zu einer Trübung oder Verfärbung der Fertigteile Anlaß geben.

Es wurde nun gefunden, daß diese Aufgabe gelöst wird durch Polyhydroxypolyalkylenpolyäther, die durch Styrol-Acrylnitril-Copolymerisate modifiziert sind.

Gegenstand der Erfindung sind somit antistatische thermoplastische Formmassen auf der Basis von Copolymerisaten von Styrol und/oder $\alpha$-Methylstyrol und Acrylnitril, die dadurch gekennzeichnet sind, daß sie als antistatisches Mittel 0,01 bis 1,5 Gew.-% mindestens eines durch mindestens ein Styrol-Acrylnitril-Copolymerisat modifizierten Polyhydroxypolyalkylenpolyäthers enthalten.

Die Copolymerisate von Styrol und/oder $\alpha$-Methylstyrol und Acrylnitril, die die Basis der erfindungsgemäßen Formmassen bilden, sind bekannt. Es handelt sich dabei beispielsweise um Handelsprodukte, die unter den Bezeichnungen SAN-Polymere (= Styrol-Acrylnitril-Copolymere) ABS-Polymere (mit Butadienkautschuk modifizierte Styrol-Acrylnitril-Copolymere), ASA-Polymere (mit Acrylesterelastomeren modifizierte Styrol-Acrylnitril-Copolymere) und AES-Polymere (mit EPDM-Kautschuk modifizierte Styrol-Acrylnitril-Copolymere) bekannt sind.

Bei den genannten Copolymerisaten kann es sich beispielsweise um eine sogenannte »Hartkomponente« handeln, d. h. um Copolymerisate die praktisch ausschließlich aus Styrol und/oder $\alpha$-Methylstyrol und Acrylnitril bestehen und einen Acrylnitrilgehalt von etwa 8 bis 50 Gew.-% aufweisen. Bevorzugte Hartkomponenten sind Styrol-Acrylnitril-Copolymere mit 8 bis 50, insbesondere 20 bis 40 Gew.-% Acrylnitril, $\alpha$-Methylstyrol-Acrylnitril-Copolymere mit 25 bis 35 Gew.-% Acrylnitril und $\alpha$-Methylstyrol-Styrol-Acrylnitril-Terpolymerisate mit 10 bis 40 Gew.-% Acrylnitril. Selbstverständlich können auch Mischungen verschiedener Hartkomponenten verwendet werden. Die Herstellung dieser Hartkomponenten durch Copolymerisation der Monomeren in Masse, Lösung, Suspension oder wäßriger Emulsion ist bekannt und beispielsweise in den Patentschriften US 3 747 899, US 2 714 101, US 2 727 884, US 3 442 880, US 3 288 731, US 3 198 775, DE-OS 454 894 und DE-OS 2 559 069 beschrieben.

Vorzugsweise werden Hartkomponenten mit einer Viskositätszahl von 40 bis 150, insbesondere 50 bis 100, vorzugsweise 50 bis 85 verwendet (bestimmt nach DIN 53 726; Lösung von 0,5 g Polymerisat in 100 ml Dimethylformamid).

Vorzugsweise werden die bekannten durch kautschukartige Polymerisate schlagzäh modifizierten Copolymerisate von Styrol und/oder $\alpha$-Methylstyrol und Acrylnitril als Basis der erfindungsgemäßen Formmassen verwendet. Dabei handelt es sich in der Regel um sogenannte Pfropfmischpolymerisate, die durch Polymerisation von Styrol und/oder $\alpha$-Methylstyrol und Acrylnitril in Gegenwart eines kautschukartigen Polymerisats hergestellt werden.

Geeignete kautschukartige Polymerisate sind beispielsweise Polybutadien, Butadien-Acrylester-Copolymere auf der Basis von Acrylsäurebutyl- und/oder -ethylhexylester, Polyacrylsäurealkylester, insbesondere solche mit 1 bis 8 Kohlenstoffatomen im Alkylrest, Copolymere aus Butadien, Acrylsäurealkylestern und Vinylalkylethern, Copolymere aus Ethylen, Propylen und einer Dienkomponente. Das kautschukartige Polymerisat hat in der Regel eine Glasübergangstemperatur unter 0° C, vorzugsweise unter −40° C (gemessen nach der DSC-Methode, K. M. Illers, Makromol. Chemie 127 (1969), 51).

Zur Herstellung des Pfropfmischpolymerisats geht man vorzugsweise von etwa 40 bis 85 Gew.-% des kautschukartigen Polymerisats und 15 bis 60 Gew.-% einer Mischung von Styrol und Acrylnitril im Gewichtsverhältnis 88 : 12 bis 65 : 35 aus.

Die Herstellung der kautschukmodifizierten Copolymerisate ist bekannt, z. B. aus DE-AS 2 427 960, DE-AS 1 811 882, DE-AS 1 260 135, DE-AS 1 238 207, DE-AS 1 247 021, US-PS 3 515 774.

Die erfindungsgemäßen Formmassen können selbstverständlich auch aus Mischungen der Hartkomponente und der genannten kautschuk-modifizierten Copolymerisate bestehen.

Die Formmassen können als weitere Komponente gegebenenfalls übliche Zusatz- und/oder Hilfsstoffe in gebräuchlichen und wirksamen Mengen enthalten.

Erfindungswesentlich ist der Zusatz von 0,01 bis 1,5 Gew.-% eines durch Styrol-Acrylnitril-Copolymerisats modifizierten Polyhydroxypolyalkylenpolyäthers. Hierbei handelt es sich um eine bekannte Stoffklasse, die üblicherweise für die Herstellung von Polyurethanen verwendet wird. Verfahren zu ihrer Herstellung sind beispielsweise beschrieben in US-PS 3 383 351, 3 304 273, 3 523 083, 3 110 695, 2 651 639, 3 823 201 und DE-PS 1 152 536.

Ihre Herstellung erfolgt durch Polymerisation eines Gemisches von Styrol und Acrylnitril, beispielsweise 5 bis 50 Gew.-% im Gewichtsverhältnis zwischen 90 : 10 bis 30 : 70, in einem Polyhydroxypolyalkylenpolyäther, beispielsweise 40 bis 95 Gew.-% im Molgewichtsbereich von 500 bis 10 000.

Die Polyhydroxypolyalkylenpolyäther weisen mindestens 2, vorzugsweise 2 bis 3 Hydroxylgruppen auf und sind solche der an sich bekannten Art und werden durch Polymerisation aus Epoxiden, wie Äthylenoxid- und/oder Propylenoxid mit sich selbst, z. B. in Gegenwart von $BF_3$ oder anderen üblichen sauren oder alkalischen Katalysatoren, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak, Amine, z. B. Alkylenglykol, Propylenglykol-(1,3), Trimethylolpropan, Pentaerytrit, Glycerin, Sucrose, Dihydroxydiphenylmethan, Anilin, Äthanolamin oder Äthylendiamin hergestellt. Vorzugsweise verwendet man Polyhydroxypolyalkylenpolyäther mit einem mittleren Molgewicht zwischen 500 und 10 000, insbesondere 1000 und 7000.

Die Polyhydroxypolyalkylenpolyäther enthalten üblicherweise von ihrer Herstellung her geringe Mengen an olefinischen Doppelbindungen, etwa im Bereich zwischen 0,001 und 0,01 Doppelbindungen pro Molekül. Dieser Anteil kann allerdings auch bevorzugt dadurch erhöht werden, daß man bei ihrer Herstellung geringe Menge an einkondensierbaren Verbindungen mit olefinischen Doppelbindungen mitverwendet, z. B. dadurch, daß man ungesättigte Epoxide, wie 1-Vinylcyclohexan-3,4-epoxid, Butadienmonoxid, Glycidylvinyläther, Glycidylmethacrylat und Allylglycidyläther benutzt und/oder eine ungesättigte Carbonsäure bzw. deren Anhydrid in die Polyhydroxypolyalkylenpolyäther mit einbaut. Auf diese Weise können beispielsweise Polyäther hergestellt werden, die mehr als 0,01, gegebenenfalls sogar mehr als 1 Doppelbindung pro Molekül enthalten.

Die verwendeten durch Styrol-Acrylnitril-Copolymerisate modifizierten Polyhydroxypolyalkylenpolyäther sind in der Regel hochviskose Suspensionen mit einem Feststoffgehalt von etwa 5 bis 65 Gew.-%, der im wesentlichen aus Styrol-Acrylnitril-Copolymerisat besteht und daneben noch gewisse Anteile an durch Pfropfreaktion eingebauten Polyhydroxypolyalkylenpolyäthern aufweist.

Das Einmischen des erfindungsgemäß anzuwendenden antistatischen Mittels in die Formmassen erfolgt nach bekannten Methoden, beispielsweise durch gemeinsames Extrudieren, Kneten oder Verwalzen der Komponenten. Das Einmischen kann auch gleichzeitig mit dem Einmischen weiterer Zusatz- oder Hilfsstoffe erfolgen, die gegebenenfalls mitverwendet werden, wie Füllstoffe, Glasfasern, weitere verträgliche Kunststoffe, Farbstoffe, Pigmente, Antioxidantien, Flammschutzmittel, Schmiermittel, Formtrennmittel o. ä.

Die erfindungsgemäßen Massen werden nach den üblichen für die Verarbeitung von Thermoplasten bekannten Verfahren zu Fertigteilen verarbeitet. Sie finden insbesondere Verwendung für Gehäuse von Elektrogeräten, Haushaltsgeräten, Telefonen, für Platten, Rohre, Kinderspielzeug und Möbel.

Die Fertigteile zeichnen sich aus durch eine belagfreie Oberfläche, hohe Zähigkeit und Wärmeformbeständigkeit. Sie sind frei von Trübungen und Verfärbungen. Sie sind in höherem Maße antistatisch und zeigen diese Eigenschaften auch nach langem Gebrauch und wiederholten Wäschen.

Die Erfindung wird durch die nachfolgenden Beispiele näher erläutert. Die in den Beispielen genannten Teile und Prozentangaben beziehen sich, soweit nicht anders angegeben, auf das Gewicht.

Die Kerbschlagzähigkeit wurde nach DIN 53 453 an bei 250° C gespritzten Normkleinstäben bei 23° C, der Erweichungspunkt nach Vicat nach DIN 53 460/B und der Schmelzindex nach DIN 53 735 ermittelt.

Zur Prüfung der Verarbeitbarkeit wurden jeweils 50 g der Mischung auf einem Laborwalzwerk (225 × 10 mm der Firma Berstorf) aufgebracht und 5 Minuten bei 200° C bei 15 U/min zu einem ca. 400 μm starken Walzfell verarbeitet. Hierbei wurde die Homogenität der Schmelze und die Oberflächenqualität des Walzfells beurteilt.

Zur Ermittlung der Verstaubungstendenz wurden bei 200° C Preßplatten mit den Abmessungen 160 × 160 × 2 mm hergestellt. Je eine Platte wird in eine Staubkammer eingebracht, in der durch Einblasen von Luft der Staub aufgewirbelt wird. Je eine weitere Platte wird in einem Raum mit einer relativen Luftfeuchtigkeit von 30 bis 50% aufbewahrt. Nach bestimmten Zeiten wird überprüft, ob sich an den Plattenoberflächen Staubblumen bilden.

Zur Prüfung der Oberflächenbelagbildung durch ausdiffundierendes Antistatikum an den Formteilen wurden bei 200° C Preßplatten mit den Abmessungen 50 × 80 × 2 mm hergestellt. Die Preßplatten wurden bei 40° C in einer Tropenkammer gelagert. Nach bestimmten Zeiten wurde visuell kontrolliert,

ob sich ein Oberflächenbelag bildete.

Beispiele und Vergleichsbeispiele

Die untersuchten Formmassen wurden hergestellt durch Vermischen des Copolymerisats mit dem antistatischen Mittel und ca. 0,2 Gew.-%eines phenolischen Antioxidants bei ca. 250° C in einem Entgasungs-Mischextruder und anschließendes Extrudieren und Granulieren.

Die Copolymerisate haben folgende Zusammensetzung:

I. ABS
Gemisch aus 55%Styrol-Acrylnitril-Copolymerisat mit einem Acrylnitrilgehalt von 35 Gew.-%und einer Viskositätszahl von 80 ml/g und 45%durch Polymerisation von 60 Teilen Polybutadienkautschuk der Teilchengröße von ca. 0,3 µm und 40 Teilen Styrol/Acrylnitril (Gewichtsverhältnis 70 : 30) hergestellten Pfropf-Copolymerisats.

II. Styrol-Acrylnitril-Copolymerisat mit einem Acrylnitrilgehalt von 25 Gew.-%und einer Viskositätszahl von 85 [ml/g].

III. Styrol-Acrylnitril-Copolymerisat mit einem Acrylnitrilgehalt von 35 Gew.-%und einer Viskositätszahl von 80 [ml/g].

IV. α-Methylstyrol-Acrylnitril-Copolymerisat mit einem Acrylnitrilgehalt von 30 Gew.-%und einer Viskositätszahl von 55 [ml/g].

V. α-Methylstyrol-Styrol-Acrylnitril-Terpolymerisat mit einem Styrolgehalt von 20 und einem Acrylnitrilgehalt von 25 Gew.-% und einer Viskositätszahl von 52 [ml/g].

VI. Gemisch aus 60 Teilen eines Styrol-Acrylnitril-Copolymerisats mit 35 Gew.-%Acrylnitril und einer Viskositätszahl von 80 [ml/g] und 40 Teilen eines α-Methylstyrol-Acrylnitril-Copolymerisats mit 30 Gew.-% Acrylnitril und einer Viskositätszahl von 55 [ml/g].

VII. Styrol-Acrylnitril-Copolymerisat mit 30 Gew.-%Acrylnitril und einer Viskositätszahl von 70 [ml/g].

Die verwendeten antistatischen Mittel haben folgende Zusammensetzung:

A (erfindungsgemäß) Handelsprodukt Pluracol 581 = Polyhydroxypolyalkylenpolyäther mit Molgewicht 5100 OH-Zahl 26,5, hergestellt durch gemeinsame Anlagerung von Propylenoxid und Ethylenoxid an Glyzerin mit einem geringen Zusatz von Glyzerin-monoallyläther, dadurch modifiziert, daß 80 Teile des Polyäthers mit 10 Teilen Styrol und 10 Teilen Acrylnitril versetzt und das Gemisch polymerisiert wurde.

B (nicht erfindungsgemäß)
Polypropylenglykol mit einem mittleren Molgewicht von 2000

C (nicht erfindungsgemäß)
Bishydroxyethylstearylamin

D (nicht erfindungsgemäß)

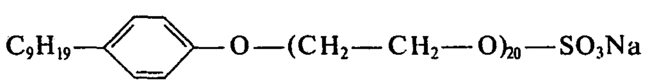 (gemäß DE-OS 29 35 835)

E (nicht erfindungsgemäß)
Mischung aus 80 Gew.-%N,N-bis(2-hydroxyethyl)-$C_{18}$-alkylamin und 20 Gew.-%Polypropylenglykol mit einem mittleren Molgewicht von 1500 (gemäß US-PS 3 625 915, Beispiel 4)

F (nicht erfindungsgemäß)
Mischung aus 75 Gew.-% N,N-bis(2-hydroxyethyl)-$C_{12}$-alkylamin und 25 Gew.-% Polypropylenglykol mit einem mittleren Molgewicht von 1200 (gemäß US-PS 3 625 915).

Die Untersuchungsergebnisse sind in den Tabellen 1 und 2 zusammengefaßt.

Tabelle 1

| | Copolymerisat | antistatisches Mittel (Gew.-%) | Erweichungspunkt nach Vicat [°C] | Schmelzindex bei 21,6 Kp/200°C [g/10 min] | Kerbschlagzähigkeit [kJ/$m^2$] | Verstaubung, Bildung von Staubblume nach 30 Min. Staubkammer | Verstaubung, Bildung von Staubblume nach 30 Tagen Raum | Oberflächenbelagbildung nach 30 Tagen | Walzentest |
|---|---|---|---|---|---|---|---|---|---|
| Beispiele | | | | | | | | | |
| 1 | I | A 0,1 | 96 | 3,1 | 20,2 | nein | nein | nein | homogen |
| 2 | I | A 0,2 | 96 | 3,3 | 21,0 | nein | nein | nein | homogen |
| 3 | I | A 0,3 | 97 | 3,2 | 21,0 | nein | nein | nein | homogen |
| 4 | I | A 0,4 | 95 | 3,4 | 23,4 | nein | nein | nein | homogen |
| 5 | I | A 0,6 | 94 | 3,9 | 20,8 | nein | nein | nein | homogen |
| 6 | I | A 0,8 | 96 | 6,0 | 21,0 | nein | nein | nein | homogen |
| 7 | I | A 1 | 96 | 10,5 | 21,0 | nein | nein | nein | homogen |
| Vergleichsversuche | | | | | | | | | |
| 8 | I | B 0,1 | 97 | 2,9 | 20,3 | ja | ja | nein | homogen |
| 9 | I | B 5 | 94 | 3,0 | 18,2 | nein | nein | nein | unhomogen |
| 10 | I | C 1 | 95 | 3,5 | 20,4 | ja | nein | ja | homogen |
| 11 | I | D 0,5 | 96 | 3,1 | 19 | ja | ja | nein | homogen |
| 12 | I | – | 96 | 3,1 | 20,2 | ja | ja | ja | homogen |

Die genannten Schmelzindices sind nach DIN 53 735 bei 21,6 Kp und 200°C bestimmt worden.

Tabelle 2

| | Copoly-merisat | antistatisches Mittel (Gew.-%) | Erweichungs-punkt nach Vicat [°C] | Schmelzindex bei 21,6 Kp/ 200° C [g/10 min] | Kerbschlag-zähigkeit [kJ/m²] | Verstaubung, Bildung einer Staubblume Staubkammer 30 Min. | 30 Tage | Oberflächen-belagbildung nach 30 Tagen | Walzentest |
|---|---|---|---|---|---|---|---|---|---|
| Beispiele | | | | | | | | | |
| 13 | II | A 0,05 | 104 | 30,2 | 3,8 | nein | nein | nein | homogen |
| 14 | II | 0,1 | 104 | 30,4 | 3,7 | nein | nein | nein | homogen |
| 15 | II | 0,5 | 104 | 32,1 | 3,8 | nein | nein | nein | unhomogen |
| 16 | III | 0,1 | 105 | 25,3 | 3,3 | nein | nein | nein | homogen |
| 17 | IV | 0,1 | 116 | 7,2 | 4,5 | nein | nein | nein | homogen |
| 18 | V | 0,1 | 109 | 14,3 | 3,8 | nein | nein | nein | homogen |
| 19 | VI | 0,1 | 109 | 17,3 | 3,9 | nein | nein | nein | homogen |
| Vergleichs-versuche | | | | | | | | | |
| 20 | II | E 2,5 | 101 | 38,3 | 3,1 | ja | nein | nein | unhomogen |
| 21 | VII | F 2,0 | 101 | 33,5 | 3,0 | ja | nein | ja | unhomogen |
| 22 | II | D 0,5 | 102 | 33,0 | 3,5 | ja | ja | nein | homogen |

**Patentansprüche**

1. Antistatische thermoplastische Formmassen auf der Basis von Copolymerisaten von Styrol und/oder $\alpha$-Methylstyrol und Acrylnitril, dadurch gekennzeichnet, daß sie als antistatisches Mittel 0,01 bis 1,5 Gew.-% mindestens eines durch mindestens ein Styrol-Acrylnitril-Copolymerisat modifizierten Polyhydroxypolyalkylenpolyäthers enthalten.
2. Formmassen gemäß Anspruch 1, dadurch gekennzeichnet, daß das antistatische Mittel durch Polymerisation einer Mischung von 5 bis 60 Gew.-% Styrol/Acrylnitril im Gewichtsverhältnis 90 : 10 bis 30 : 70 und 40 bis 95 Gew.-% eines Polyhydroxypolyalkylenpolyäthers des Molekulargewichtsbereiches 500 bis 10 000 hergestellt wurde.
3. Formmassen gemäß Anspruch 1, dadurch gekennzeichnet, daß sie als Basis Copolymerisate von Styrol und/oder $\alpha$-Methylstyrol und 8 bis 50 Gew.-% Acrylnitril enthalten.
4. Formmassen gemäß Anspruch 1, dadurch gekennzeichnet, daß sie als Basis durch kautschukartige Polymerisate schlagzäh modifizierte Copolymerisate von Styrol und/oder $\alpha$-Methylstyrol und Acrylnitril enthalten.
5. Verwendung von durch Styrol-Acrylnitril-Copolymerisate modifizierten Polyhydroxypolyalkylenpolyäthern als antistatisches Mittel für thermoplastische Formmassen auf der Basis von Copolymerisaten von Styrol und/oder $\alpha$-Methylstyrol und Acrylnitril, die gegebenenfalls durch kautschukartige Polymerisate schlagzäh modifiziert sind.

**Claims**

1. An antistatic thermoplastic molding material based on a copolymer of styrene and/or $\alpha$-methylstyrene and acrylonitrile, which contains, as antistatic agent, from 0.01 to 1.5 percent by weight of at least one polyhydroxy polyalkylene polyether modified with at least one styrene -acrylonitrile copolymer.
2. A molding material as claimed in claim 1, wherein the antistatic agent was produced by polymerization of a mixture of 5 to 60 percent by weight of styrene/acrylonitrile in a weight ratio of 90 : 10 to 30 : 70 and 40 to 95 percent by weight of a polyhydroxy polyalkylene polyether having a molecular weight of from 500 to 10 000.
3. A molding material as claimed in claim 1, which is based on a copolymer of styrene and/or $\alpha$-methylstyrene and from 8 to 50 percent by weight of acrylonitrile.
4. A molding material as claimed in claim 1, which is based on a copolymer of styrene and/or $\alpha$-methylstyrene and acrylonitrile, which has been made impact-resistant with a rubber-like polymer.
5. The use of a polyhydroxy polyalkylene polyether modified with styrene-acrylonitrile copolymers as an antistatic agent for thermoplastic molding materials based on a copolymer of styrene and/or $\alpha$-methylstyrene and acrylonitrile, which may or may not have been modified with a rubber-like polymer.

**Revendications**

1. Matières à mouler thermoplastiques antistatiques, à base de copolymères du styrène et(ou) de l'$\alpha$-méthylstyrène et d'acrylonitrile, caractérisées en ce qu'elles contiennent comme agent antistatique entre 0,01 et 1,5% en poids d'au moins un polyhydroxy-polyalkylène-polyéther modifié par au moins un copolymère de styrène et d'acrylonitrile.
2. Matières à mouler suivant la revendication 1, caractérisées en ce que l'agent antistatique a été préparé par polymérisation d'un mélange de 5 à 60% en poids de styrène et d'acrylonitrile dans un rapport pondéral compris entre 90 : 10 et 30 : 70 et de 40 à 95% en poids d'un polyhydroxy-polyalkylène-polyéther avec un poids moléculaire compris dans la gamme de 500 à 10 000.
3. Matières à mouler suivant la revendication 1, caractérisées en ce qu'elles contiennent comme base des copolymères du styrène et(ou) de l'$\alpha$-méthyl-styrène et entre 8 et 50% en poids d'acrylonitrile.
4. Matières à mouler suivant la revendication 1, caractérisées en ce qu'elles contiennent comme base des copolymères du styrène et(ou) de l'$\alpha$-méthyl-styrène et de l'acrylonitrile, rendus résilients par une modification par des polymères caoutchouteux.
5. Utilisation de polyhydroxy-polyalkylène-polyéthers modifiés par des copolymères de styrène et d'acrylo-nitrile comme agents antistatiques pour des matières à mouler thermoplastiques à base de copolymères du styrène et(ou) de l'$\alpha$-méthyl-styrène et de l'acrylonitrile; éventuellement rendus résilients par une modification par des polymères caoutchouteux.